# EUROPÄISCHE PATENTSCHRIFT

(11) **EP 2 086 869 B1**
(45) Veröffentlichungstag und Bekanntmachung des Hinweises auf die Patenterteilung: **13.08.2014**
(21) Anmeldenummer: 07819704.3
(22) Anmeldetag: 08.11.2007
(51) Int. Cl.: B29C 49/06, B67C 7/00

(54) **VORRICHTUNG UND VERFAHREN ZUR HERSTELLUNG VON KUNSTSTOFFBEHÄLTERN**
DEVICE AND METHOD FOR THE PRODUCTION OF PLASTIC CONTAINERS
DISPOSITIF ET PROCÉDÉ DE FABRICATION DE RÉCIPIENTS EN MATIÈRE PLASTIQUE

(30) Priorität: 09.11.2006 DE 102006053193
(43) Veröffentlichungstag der Anmeldung: 12.08.2009
(73) Patentinhaber: Krones AG, 93073 Neutraubling (DE)
(72) Erfinder: FISCHER, Sven, D-93055 Regensburg (DE)
(74) Vertreter: Bittner, Bernhard
(86) Internationale Anmeldenummer: PCT/EP2007/009697
(87) Internationale Veröffentlichungsnummer: WO 2008/055685

(56) Entgegenhaltungen:
- DE-A1- 19 928 325
- DE-A1-102004 023 419
- DE-A1-102005 015 565

## Beschreibung

Die Erfindung betrifft eine Vorrichtung gemäß dem Oberbegriff des Anspruchs 1, sowie ein Verfahren gemäß dem Oberbegriff des Anspruchs 16, und wie aus der DE 10 2004 023 419 A1 bekannt. Bei der Vorrichtung zur Herstellung von Kunststoffbehältern handelt es sich vorzugsweise um eine Maschine aus dem Bereich der Pharmazie- oder Lebensmitteltechnik. Solche Maschinen und Verfahren werden hauptsächlich zur Produktion und zur Vorbehandlung von Behältern, wie Flaschen, Dosen, Standbeuteln oder Ampullen eingesetzt. Vorzugsweise werden Behälter aus Kunststoff, insbesondere aus PET hergestellt, behandelt, befüllt und verschlossen.

Solche Maschinen zum Herstellen, Behandeln und Befüllen von Behältern sind aus dem Stand der Technik reichlich bekannt. So zeigt z.B. die WO 2006 00 3304 A1 eine Maschine zum Herstellen und Füllen von PET-Flaschen, wobei die Behälter zwischen der Herstellung und des Füllvorgangs im Sinne einer Bodenkühlung behandelt werden. Die DE 10 2004 023419 A1 bezieht sich ebenso auf ein Verfahren und eine Vorrichtung zum Abkühlen von frisch geblasenen Kunststoffflaschen im Zusammenhang mit einer Befüllung von solchen kurz zuvor hergestellten Kunststoffflaschen in einer Blockanlage, wobei hier Flaschen mit verschiedenen Flaschengrößen in einem Kühltunnel unterschiedlich behandelt werden. Die DE 199 28 325 A1 zeigt eine Abfüllvorrichtung für Flaschen oder dergleichen, welche eine Blasmaschine und eine Füllmaschine mit einer dazwischen angeordneten Spülmaschine aufweist. Die Spülmaschine kann verschiedene Flaschen je nach gefordertem Reinheitsgrad unterschiedlich behandeln. Die EP 1 572 540 B1 zeigt eine Vorrichtung und ein Verfahren zum Sterilisieren von Behältern, wobei die Sterilisation von bestimmten Umgebungsparametern abhängt.

Solche Maschinen zum Sterilisieren von Verpackungen sind relativ komplex aufgebaut. Diese komplexe Bauweise hat zum Nachteil, dass solche Maschinen nicht sehr flexibel bezüglich der herzustellenden Behälter sind. Während es also für eine Behälterhorstellungsmaschine, wie z.B. für eine Streckblasmaschine, relativ einfach ist, auf unterschiedliche herzustellende Behälterarten umgestellt zu werden, ist es für die Behandlungseinheit wesentlich schwieriger, flexibel auf unterschiedliche Behälteranforderungen zu reagieren. Nachteil des Standes der Technik ist der, dass für Behälter für unterschiedliche Lebensmittel, wie z.B. Flaschen für Getränke mit Kohlensäure und Flaschen für Getränke ohne Kohlensäure, unterschiedliche Anlagen benötigt werden. Dies ist sehr teuer und sehr aufwändig.

Es ist deshalb Aufgabe der vorliegenden Erfindung, ein Verfahren bzw. eine Vorrichtung zu Verfügung zu stellen, mit der auf einfache und flexible Art und Weise Behälter mit unterschiedlichsten Anforderungen hergestellt werden können.

Die Aufgabe bezüglich der Vorrichtung wird gelöst durch die Merkmale des Anspruchs 1, die Aufgabe bezüglich des Verfahrens durch die Merkmale des Anspruchs 16.

Bei der Vorrichtung zur Herstellung von Kunststoffbehältern handelt es sich vorzugsweise um eine Anlage zum Herstellen, zum Behandeln und zum Füllen der Behälter. Die Behälter sind vorzugsweise aus Kunststoff, insbesondere aus PET ausgebildet. Sie werden vorzugsweise aus Vorformlingen aus Kunststoff hergestellt, die in einem ersten Schritt erwärmt, sowie in einem zweiten Schritt mittels eines Blasvorgangs, insbesondere eines Streckblasvorgangs, zu den gewünschten Behältern ausgeformt werden. Die Behälterbehandlungsstation ist vorzugsweise eine Vorrichtung, durch welche die Behälter auf ihrem Weg von der Behälterherstellungsmaschine zur Füllmaschine transportiert werden. Der Transport der Behälter durch diese Vorrichtung kann auf unterschiedliche Arten erfolgen, so ist beispielsweise ein Transport auf einem Transportband bzw. in einer Transportkette denkbar, die die Behälter am Behälterboden bzw. im Bereich des Behälterrumpfes und / oder Behälterhalses hält. Gemäß einer bevorzugten Ausführungsform der Erfindung werden die Behälter durch die Behälterbehandlungsstation mittels Sternrädern transportiert. Die Sternräder können die Behälter an verschiedenen Stellen greifen, bevorzugt ist ein Transport bzw. ein Ergreifen im Bereich eines Tragrings möglich. Dies hat den Vorteil, dass die Behälter in einer festen Teilung durch die Behälterbehandlungsstation geführt werden, so dass die vorgelagerte und die nachgelagerte Maschine synchron zueinander angetrieben werden können. Eine vorteilhafte Betriebsweise dieser Anlage ist der Blockbetrieb.

Die Behälterbehandlungsstation weist mehrere Behandlungsaggregate auf, im Bereich derer eine Behandlung stattfinden kann. Die Aggregate sind von einer Anlagensteuerung wahlweise aktivier- oder deaktivierbar. Eine dementsprechende Aktivierung bzw. Deaktivierung der einzelnen Aggregate erfolgt in Abhängigkeit der herzustellenden Behälter. Sollen Behälter für beispielsweise karbonisierte Getränke hergestellt werden, so weisen diese bezüglich ihrer Eigenschaften andere Anforderungen auf, als Behälter für nicht karbonisierte Getränke. Um diese differenzierten mechanischen und/oder optischen Eigenschaften der Behälter einstellen zu können, ist eine unterschiedliche Behandlung nach dem Herstellen der Behälter in der Blasmaschine notwendig. Ein solcher Unterschied in der Behandlung kann z. B. das schnelle Abkühlen des Behälterbodens nach der Herstellung des Behälters sein.

Vorzugsweise umfasst die Behälterbehandlungsstation als verschiedenartige Aggregate Kühl- und/oder Wärme- und/oder Sterilisations- und/oder Reinigungs- und/oder Ausstattungsaggregate. Weitere Aggregattypen sind denkbar, um eine möglichst flexible Behälterherstellung zu gewährleisten. Bei den Ausstattungsaggregaten handelt es sich z. B. um Etikettieraggregate. Im Sterilisationsaggregat wird vorzugsweise mit flüssigem oder dampfförmigem Sterilisationsmittel behandelt.

Da gemäß einer bevorzugten Weiterbildung der Erfindung eine Sterilisation der hergestellten Behälter möglich sein soll, ist es von Vorteil, dass zumindest ein Teil der Behälterbehandlungsstation einen gegenüber den Umgebungsbedingungen abgeschlossenen Raum bildet. Vorzugsweise ist die gesamte Behälterbehandlungsstation als Reinraum ausgebildet.

Die Behandlungsstationen können verschiedenartiger Natur sein. So ist es z.B. sowohl möglich, dass die Behandlungsaggregate still stehen und die Behälter während des Transports durch die Aggregate bewegt werden, als auch dass sich die Aggregate bewegen und zumindest während eines Teils der Bewegung der Behälter durch die Behälterbehandlungsstation einen gleichen Weg haben. Weiterhin ist es denkbar, dass die Aggregate so angebracht sind, dass in der Behälterbehandlungsstation erneut abgeschlossene Behandlungsräume entstehen, in denen bestimmte Vorgänge stattfinden. So ist es möglich, dass in der Wand der Behälterbehandlungsstation und / oder eines Aggregats Sprühdüsen für Sterilisationsmittel angebracht sind, die einen bestimmten Bereich abdecken und so Behälter während ihres Transports an bestimmten Orten besprühen. Es ist aber auch denkbar, dass kleinere geschlossene Einheiten gebildet werden, so dass z.B. Behandlungstunnel gebildet werden. Diese können gegenüber der Umgebung, also gegenüber der Behälterbehandlungsstation vollkommen oder zum Teil abgeschlossen sein.

Bei zu behandelnden Behältern, die nur an einem Ende eine Öffnung aufweisen, können auch die Sternräder selbst als Behandlungsstationen ausgebildet sein. Eine bevorzugte Weiterbildung der Erfindung besteht darin, dass in den Transportsternen über der Mündung der zu transportierenden und zu behandelnden Behälter jeweils mindestens eine Düse angebracht ist, die Behandlungsmedien in die Behälter einbringen kann. Durch solche Düsen kann als Sterilisationsmittel Wasserstoffperoxyd oder Peressigsäure in die Behälter eingeleitet werden. Diese über den Mündungen angeordneten Düsen sind vorzugsweise so ausgebildet, dass sie im Bereich des jeweiligen Transportsterns mit den Behältern fest zugeordnet umlaufen. Vorzugsweise sind sie höhenbeweglich angebracht, so dass die Düse oder zumindest ein Teil dieser während-des Einbringens von Behandlungsmittel zumindest teilweise in den Behälter hineinragt. Diese Anordnung hat den Vorteil, dass das Behandlungsmittel sehr genau dosiert werden kann bezogen auf den Verbrauch und auf den zu behandelnden Ort.

Vorzugsweise weist die Vorrichtung pro Behandlungsaggregat einen stationären Verteiler auf, der sowohl innerhalb als auch außerhalb des Gehäuses der Behälterbehandlungsstation angebracht sein kann. Der Verteiler steht zum einen mit einer Behandlungsmittelzufuhr und zum anderen mit den Behandlungsaggregaten in Verbindung. Da der Verteiler vorzugsweise einen festen und einen drehenden Teil aufweist, ist eine direkte Kopplung sowohl zur stationären Behandlungsmittelzuführung, als auch zu den rotierenden Transportsternen möglich. Im Bereich des Verteilers ist mindestens ein Verdampfer angeordnet, der flüssiges Sterilisations- oder Reinigungsmittel verdampfen kann.

Das Verfahren zur Herstellung von Kunststoffbehältern weist zumindest die Schritte der Herstellung der Behälter, der Zwischenbehandlung und des Füllens der Behälter auf, wobei die Zwischenbehandlung zeitlich zwischen dem Herstellungsvorgang und dem Füllvorgang stattfindet. Gemäß einer bevorzugten Ausführungsform der Erfindung wird in mindestens einem Behandlungsaggregat eine Sterilisation der Behälter vorgenommen, wobei eine Außen- und/oder Innenbehandlung stattfindet. Eine Behälterinnenbehandlung findet vorzugsweise durch das Einbringen eines Sterilisationsmediums direkt in die Flasche über deren Mündung statt, da so ein möglichst geringer und gezielter Medienverbrauch zu verwirklichen ist. Ein Tropfen aus einer -Düse in den Behälter ist dabei genauso denkbar, wie ein Sprühen des Sterilisationsmediums. Es ist auch möglich, eine Außenbehandlung des Behälters vorzunehmen, wobei hier bevorzugt mindestens ein eigener Sterilisationstunnel vorhanden ist. Ein Sterilisationstunnel hat den Vorteil, dass der Raum um den zu sterilisierenden Behälter möglichst klein gehalten werden kann, so dass der Verbrauch an Sterilisationsmedium minimiert wird.

Eine Sterilisation bzw. Reinigung kann durch ein flüssiges und/oder gasförmiges und/oder dampfförmiges Sterilisationsmedium bewirkt werden, wobei als bevorzugtes Medium Wasserstoffperoxyd verwendet wird. Dies hat den Vorteil, dass hohe Sterilisationswirkungen bei geringen Sterilisationszeiten durchsetzbar sind. Wird flüssiges Wasserstoffperoxyd verwendet, sind vorzugsweise Verdampfer vorgesehen, mit Hilfe derer ein Einbringen von dampfförmigem Sterilisationsmittel in die Behälter bewerkstelligt werden kann. Die Sterilisation wird vorzugsweise zu einem Zeitpunkt während des Behandlungsverfahrens durchgeführt, zu dem die Behälter noch eine Restwärme aufweisen. Diese Restwärme ermöglicht eine trockene Sterilisation mit dampfförmigem Sterilisationsmittel, ohne dass es kondensiert. Das Ausnutzen der Restwärme ist besonders vorteilhaft, da eine trockene Sterilisation besonders wünschenswert ist, um die Entfernung der Restbestände des Sterilisationsmittels zu erleichtern. Andere Sterilisationsmedien sind allerdings auch denkbar.

Um den Effekt der "Nichtkondensation" des Sterilisationsmittels in der Behälterbehandlungsstation optimal ausnutzen zu können, ist es möglich, dass in mindestens einem Behandlungs- und/ oder Transferstern ein Temperaturausgleich in der Behälterwand durch gezieltes Kühlen oder Erwärmen durchgeführt wird. Dazu kann beispielsweise rel. warme oder kalte Luft in die Behälter eingeblasen oder deren Außenwand angeblasen werden. Dadurch wird eine Homogenisierung der Temperaturverteilung ermöglicht.

Anstatt der Sterilisation ist es auch möglich, mit dem erfindungsgemäßen Verfahren und Vorrichtung eine Reinigung bzw. Desinfektion der Behälter vorzunehmen. Eine Reinigung bzw. Desinfektion der Behälteraußenwand kann z. B. mit sterilem,Wasser durchgeführt werden.

Gemäß einer bevorzugten Weiterbildung der Erfindung erfolgt der Transport der Behälter in der Behälterbehandlungsstation mittels Transportsternen, wobei die Zwischenbehandlung bevorzugt während des Transports erfolgt. Vorzugsweise befinden sich mindestens zwei verschiedene Arten von Transportsternen in der Behälterbehandlungsstation, nämlich zum einen Behandlungssterne und zum anderen Transfersterne. Die Transportsterne können gleiche oder unterschiedliche Durchmesser aufweisen. Bevorzugter Weise sind die Behandlungssterne in ihrem Durchmesser größer als die Transfersterne und es finden dort die hauptsächlichen Behandlungsschritte statt. Vorzugsweise findet in den Behandlungssternen eine Sterilisation des Innenraumes der Behälter und in den Transfersternen eine Sterilisation der Behälteraußenwand statt. Die Behälterkühlung ist vorzugsweise in den Transfersternen untergebracht, wobei eine solche Behandlung auch in den Behandlungssternen möglich ist.

Mit dem erfindungsgemäßen Verfahren können Behälter mit unterschiedlichen Eigenschaften, vorzugsweise mit differenzierten mechanischen Eigenschaften hergestellt werden. Es ist möglich, Behälter für karbonisierte oder nicht karbonisierte Getränke herzustellen. Auf Grund ihrer unterschiedlichen Zusammensetzungen und Wirkungen auf den Behälter sowie unterschiedlichen Empfindlichkeitsstufen werden verschiedene Behälter bzw. verschiedene Behandlungen während des Herstellens der fertigen Produkte benötigt. Für das Abfüllen von karbonisierten Getränken braucht man beispielsweise Behälter mit stabilem Boden, da es sonst passieren kann, dass sich der Behälterboden nach außen wölbt und der Behälter nicht mehr stehen kann. Für einen solchen stabilen Behälter ist es von Vorteil, wenn der Behälterboden nach der Herstellung des Behälters alsbald gekühlt wird. Das Kühlen bewirkt ein "einfrieren" der Molekülstruktur zu dem dementsprechenden Zeitpunkt, wodurch eine erhöhte Stabilität erreicht wird.

Zum Abfüllen von nicht karbonisierten Getränken wird eine solche stabile Verpackung nicht benötigt, wobei es aber hier für eine ausreichende Haltbarkeit darauf ankommt, möglichst wenige Keime in die abzufüllende Flasche zu bringen. Ein besonders sauberes bzw. u.U. sogar steriles/keimarmes Abfüllen von solchen Getränken ist daher notwendig. Werden also nicht karbonisierte Getränke erfindungsgemäß verpackt, so werden nur die Aggregate aktiviert, die für die Reinigung, bzw. Sterilisation von Nöten sind. Die anderen Aggregate bleiben inaktiv, wobei zwar ein Transport, nicht jedoch eine Behandlung stattfindet.

Das erfindungsgemäße Verfahren und die erfindungsgemäße Vorrichtung werden durch die Abbildungen näher erläutert. Dabei zeigen:
- Fig. 1: eine Draufsicht auf eine Vorrichtung zur Herstellung von Kunststoffbehältern,
- Fig. 2: eine Draufsicht auf eine Behälterbehandlungsstation,
- Fig. 3: einen Schnitt durch ein Behandlungsaggregat,
- Fig. 4: einen Schnitt durch ein anderes Behandlungsaggregat,
- Fig. 5: eine isometrische Ansicht einer Behälterbehandlungsstation.

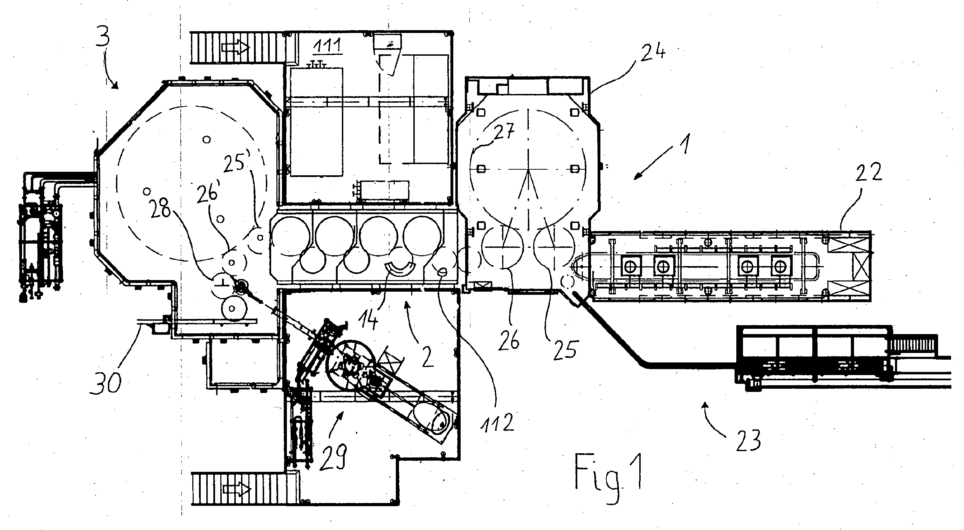

Fig. 1 zeigt eine Behälterherstellungsmaschine 1, die eine Preformsortierung und -zuführung 23, einen Ofen 22 sowie eine Streckblasmaschine 24 umfasst. Die Preforms werden von einer hier nicht gezeigten Speichereinrichtung der Preformsortierung 23 zugeführt und über eine Zuführung zum Ofen 22 transportiert, wo sie auf eine bestimmte Orientierungstemperatur gebracht werden. Der Ofen 22 kann ein Infrarotheizofen oder ein Mikrowellenofen sein. Vom Ofen 22 werden die erwärmten Preforms über das Einlaufsternrad 25 an das Blasrad 27 übergeben. Das Blasrad weist mehrere hier nicht gezeigte Blasformen auf, in denen die Preforms mittels Druckluft aufgeblasen werden. Die dann fertig geblasenen Flaschen werden von dem Auslaufsternrad 26 übernommen und an einen Übergabestern 10a übergeben, der die Transferlücke zwischen dem Auslaufsternrad 26 und dem ersten Transferstern 10 der Behälterbehandlungsstation 2 schließt. Beispielsweise der Übergabestern 10a kann als Temperaturausgleichsstern verwendet werden, um im Flascheninnenraum Zonen unterschiedlicher Temperatur auf eine annähernd gleichmäßige Oberflächentemperatur zu bringen. Hierzu kann von mitlaufenden Düsen beispielsweise temperierte Sterilluft mit definierter Temperatur durch die Mündung in Richtung zum Flaschenboden eingeblasen werden, die dann Wärme aus heißeren Zonen in Zonen mit geringerem Temperaturniveau transferiert.

Sowohl das Auslaufsternrad 26 als auch die folgenden Sternräder, wie z.B. der Übergabestern 10a, die Transfersterne 10 sowie die Behandlungssterne 9 ergreifen die Flaschen jeweils im Mündungsbereich. Somit ist ein geschlossener Transport der geblasenen Flaschen zumindest vom Auslaufsternrad 26 bis zum Auslauf der Behälterbehandlungsstation 2 an der Mündung der Flaschen gewährleistet. Innerhalb der Behälterbehandlungsstation 2 werden die Behälter 50 durch die Behandlungsaggregate im Mündungsbereich hängend transportiert. Vom Auslauf der Behälterbehandlungsstation 2 werden die behandelten Behälter 50 an die Behälterfüllmaschine 3 übergeben und ein Füllvorgang wird durchgeführt. Nach diesem Füllvorgang werden die Behälter in einem Verschließer 28 verschlossen, wobei der Verschließer 28 mit gereinigten, desinfizierten bzw. sterilisierten Verschlüssen aus der Verschlussdesinfektion 29 versorgt wird. Die Verschlussdesinfektion 29 ist ein Modul zum Desinfizieren von Verschlüssen mit Wasserstoffperoxyd, wobei auch andere Desinfektionsverfahren, wie z.B. mit flüssiger Peressigsäure, denkbar sind.

Nach dem Verschließen der Behälter werden diese an einen Behälterabtransport 30 übergeben, der sowohl ein Förderband, als auch eine Neckhandlungsstrecke umfassen kann.

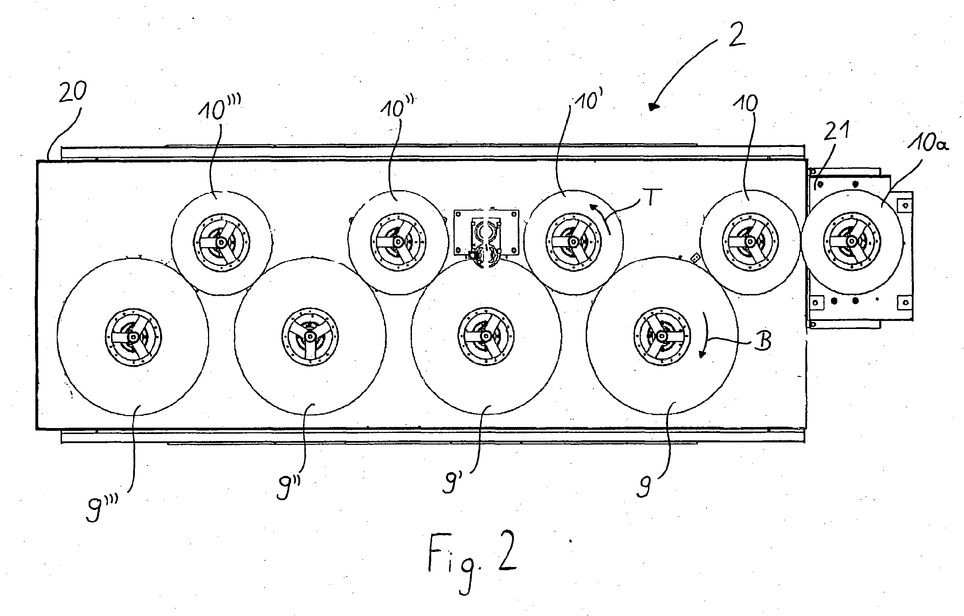

Fig. 2 zeigt eine Draufsicht der Behälterbehandlungsstation 2, die über einen Übergabestern 10a mit der Behälterherstellungsmaschine 1 verbunden ist.

Die gesamte Behälterbehandlungsstation 2 ist in einem Gehäuse 20 untergebracht, so dass die Atmosphäre innerhalb der Behälterbehandlungsstation 2 von der Atmosphäre außerhalb im Wesentlichen abgeschlossen werden kann. Eine Herstellung definierter Umgebungsbedingungen innerhalb der Behälterbehandlungsstation 2 ist also möglich.

In Transportrichtung stromauf der Behälterbehandlungsstation 2 befindet sich der Übergabestern 10a, der in einer Schleuse 21 untergebracht ist, so dass eine Überführung der hergestellten Behälter aus der Behälterherstellungsmaschine 1 in die Behälterbehandlungsstation 2 möglich ist.

Die Behälterbehawdlungsstation 2 selbst weist mehrere Transportsterne 8 auf, von denen vier als Behandlungssterne 9, 9', 9'', 9''', sowie vier als Transfersterne 10, 10', 10", 10''' ausgebildet sind. Die Behälter 50 durchlaufen während ihrer Behandlung in der Behälterbehandlungsstation 2 ständig alle Transportsterne 8, auch wenn eine Behandlung nur in bestimmten Behandlungs- bzw. Transfersternen 9, 10 vorgesehen ist. Am Ende der Behälterbehandlungsstation 2 werden die Behälter 50 von einem Einlaufsternrad 25' an die Behälterfüllmaschine 3 übergeben.

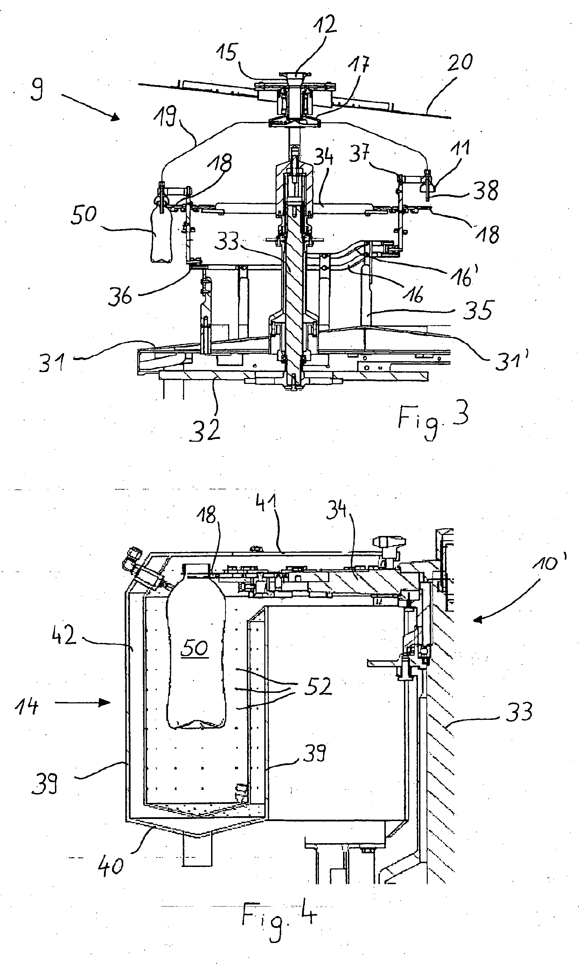

Fig. 3 zeigt einen Querschnitt durch den Behandlungsstern 9. Der Behandlungsstern 9 weist eine zentrale Sternsäule 33 auf, die in einer Tragplatte 32 verankert ist. Die Tragplatte 32 ist Bestandteil des Maschinengrundgestells der Behälterbehandlungsstation 2, und befindet sich in der äußeren Atmosphäre, also nicht im Behandlungsraum. Die Abgrenzung des Behandlungsraumes von unten nach oben gesehen beginnt mit den Tischplatten 31 und 31'. Diese weisen vorzugsweise einen Winkel zueinander auf, so dass ein Gefälle zum äußeren Rand der Behälterbehandlungsstation 2 entsteht, um so jegliche Flüssigkeiten und Schmutz besser abtransportieren zu können. Die Sternsäule 33 weist Tangentialträger 34 auf, die sich in Drehrichtung B bewegen können. Am Ende der Tangentialträger 34 sind Halsgreifer 18 angebracht, die die Behälter 50 im Bereich ihrer Mündung unterhalb oder oberhalb des Tragrings ergreifen.

In der Tischplatte 31 und 31' sind Kurvenhalter 35 angebracht, an deren oberen Enden zwei Steuerkurven 16, 16' angebracht sind. Zwischen der unteren Steuerkurve 16 und der oberen Steuerkurve 16' laufen Steuerrollen 36, die mit Düsenhaltern 37 verbunden sind. Jeweils einem Tangentialträger 34 mit dazagehörigem Halsgreifer 18 ist ein Düsenhalter 37 mit angebrachter Steuerrolle 36 und mitlaufender Düse 11 bezüglich der Drehposition fest zugeordnet. Durch die Steuerkurve 16, 16' sowie die Steuerrolle 36 wird eine Höhenbewegung bezüglich der Behälter 50 der mitlaufenden Düsen 11 indiziert.

Die mitlaufenden Düsen 11 sind glockenförmig ausgebildet, so dass sie einen Durchmesser aufweisen, der größer ist als der Mündungsdurchmesser der zu behandelnden Behälter 50. Auf diese Weise können die mitlaufenden Düsen 11 über die Mündung der Behälter 50 gestülpt werden. Die mitlaufenden Düsen 11 weisen ein Applikationsrohr 38 auf, mit dem Behandlungsmedien (z.B. Sterilluft, Wasserstoffperoxyd) in die Behälter 50 eingebracht werden kann und sie sind nach oben hin mit Verbindungsleitungen 19 ausgestattet, die zu einem Verteiler 12 führen. Wird über das Applikationsrohr 38 ein Behandlungsmedium in die Behälter 50 eingebracht, so wird zuerst der Behälterinnenraum mit dem Behandlungsmedium gefüllt. Wird mehr Behandlungsmedium in die Behälter 50 gegeben, als ihr Volumen umfasst, so wird durch die glockenförmige Ausprägung der mitlaufenden Düsen 11 ein Überströmen der Behälter 50 mit Behandlungsmedium indiziert, sodass gleichzeitig eine Außendesinfektion / Außenreinigung stattfindet.

Der Verteiler 12 bildet das Verbindungsstück zwischen der Sternsäule 33 und dem Gehäuse 20 der Behälterbehandlungsstation 2. Der Verteiler 12 weist einen feststehenden Teil 15 sowie einen drehenden Teil 17 auf. Durch den feststehenden Teil -15---wird der Behälterbehandlungsstation 2 Behandlungsmedium zugeführt. Der drehende Teil 17 ist, wie oben schon erwähnt, über flexible Verbindungsleitungen 19 mit den mitlaufenden Düsen 11 verbunden, so dass das Behandlungsmedium vom Verteiler 12 über die Verbindungsleitungen 19 und die mitlaufenden Düsen 11 in die Behälter 50 gelangen kann.

Fig. 4 zeigt ein weiteres Behandlungsaggregat der Behälterbehandlungsstation 2, nämlich einen Sterilisationsaggregat, insbesondere einen Sterilisationstunnel 14, der teilumfänglich um den Transferstern 10' angebracht ist, sodass sich die Behälter 50 während des Transports entlang des Transfersterns 10' zumindest teilweise in einer von der Umgebung im Wesentlichen abschließbaren Atmosphäre befinden. Der Transferstern 10' weist ebenfalls eine Sternsäule 33 mit daran angebrachtem Tangentialträger 34 sowie an dessen Ende angebrachtem Halsgreifer 18 auf. Der Halsgreifer 18 greift den Behälter 50 unterhalb oder oberhalb des Tragrings im Bereich der Mündung. Der Sterilisationstunnel 14 weist senkrechte Seitenwände 39, sowie eine Bodenwand 40 und eine obere Wand 41 auf. Die Bodenwand 40 ist V-förmig angeordnet, so dass ein Gefälle von den Seitenwänden 39 zur Mitte der Bodenwand 40 vorliegt. Die Seitenwände 39 sowie die Bodenwand 40 schließen einen Zwischenraum 42 ein, in dem sich in Behandlungsmedium befindet. Das Behandlungsmedium kann durch die Öffnungen 52 von dem Zwischenraum 42 in das Innere des Sterilisationstunnels 14 gelangen, wo sich der Behälter 50 befindet. Auf diese Weise ist eine gleichmäßige Behandlung des Behälters 50 über dessen gesamte Oberfläche möglich. Vorzugsweise wird durch den Sterilisationstunnel 14 eine sterilisierende / desinfizierende / reinigende Außenbehandlung des Behälters 50 vollzogen. Ein solches Behandlungsmedium des Sterilisationstunnels 14 kann z.B. Wasserstoffperoxyd sein.

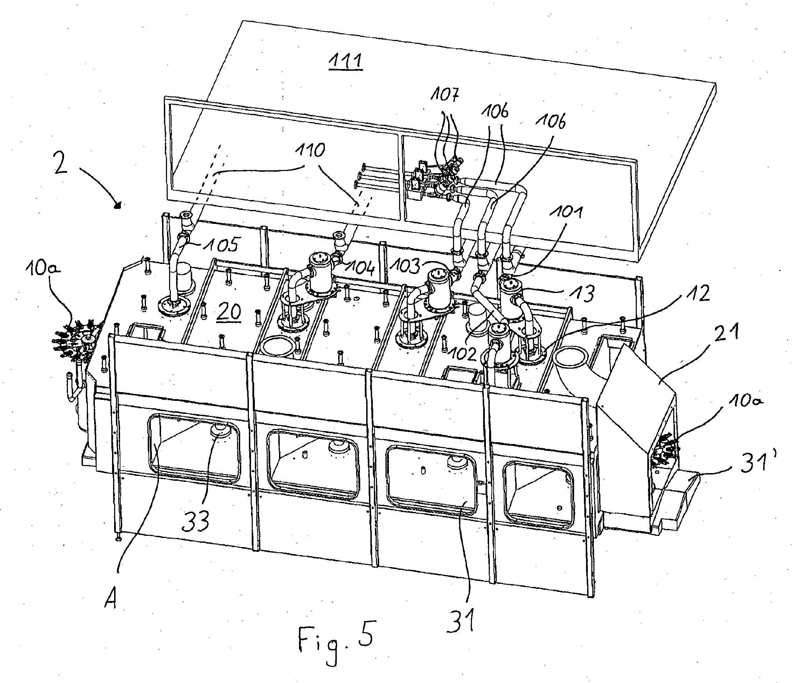

Fig. 5 zeigt eine Behälterbehandlungsstation 2 in isometrischer Ansicht, wobei die Behälter 50 von der rechten Bildhälfte zur linken Bildhälfte transportiert werden. Der Transport der Behälter 50 erfolgt wieder über eine hier nicht gezeigte Behälterherstellungsmaschine 1 und dem Übergabestern 10a durch die Schleuse 21 in die Behälterbehandlungsstation 2. Jedem Behandlungsstern 9, 9', 9", 9''', sowie dem Transferstern 10' ist eine Medienzuführung zugeordnet. So ist dem Behandlungsstern 9 sowie dessen Verteiler 12 eine Medienzufuhr 101 zugeordnet. Dem Transferstern 10' ist eine Medienzufuhr 102, dem Behandlungsstern 9' eine Medienzufuhr 103, dem Behandlungsstern 9" eine Medienzufuhr 104, sowie dem Behandlungsstern 9''' eine Medienzufuhr 105 zugeordnet. Die Medienzufuhr 101, 102, 103 sowie 104, weisen zudem je einen Verdampfer 13 auf. Die Medienzuführungen 101 bis 105 münden jeweils in den Verteilern 12 die den Transportsternen 8 zugeordnet sind.

Die Medienzuführungen 101, 102 sowie 103 weisen zusätzlich Leitungen 106 auf, durch die vor den jeweiligen Verdampfern 13-Wasserstoffperoxyd zudosiert werden kann.--Durch-die Medienzuführungen 101 bis 103 wird durch Öffnen der Ventile 107 Sterilluft mit Wasserstoffperoxyd gemischt, so dass ein sterilisierendes, dampfförmiges, mit Luft vermischtes Behandlungsmedium entsteht. Werden die Ventile nicht geöffnet, so findet nur eine Behandlung mit Sterilluft statt.

Die Behälterbehandlungsstation 2 ist so aufgebaut, dass in den Behandlungssternen 9, 9', sowie im Transferstern 10' eine Behandlung mit Wasserstoffperoxyd, und im Behandlungsstern 9'' und 9''' ein Spülen mit Sterilluft durchgeführt werden kann. Im Transferstern 10 kann eine Kühlbehandlung durch eine Stickstoffdüse 112 stattfinden, indem flüssiger Stickstoff in die Behälter 50 eingebracht wird. Vorzugsweise befindet sich eine Doppelkopfdüse im Transferstern 10, sodass jeweils zwei Behälter 50 alternierend oder gleichzeitig mit Stickstoff versorgt werden können. In diesem Fall wird nur jeweils jeder zweite Behälter von einer Stickstoffdüse 112 mit Stickstoff versorgt.

Die Sterilisations- bzw. Kühlbehandlungen finden vorzugsweise alternativ statt. Wird ein Behälter nach seiner Herstellung im Transferstern 10 mittels flüssigem Stickstoff gekühlt, so werden die Behandlungssterne 9 und 9' nicht mit Wasserstoffperoxyd, sondern lediglich mit Sterilluft versorgt. Dadurch findet zwar ein Spülen der Behälter 50 mit steriler Luft statt, eine Sterilisation mit Wasserstoffperoxyd wird jedoch nicht durchgeführt. Im Gegensatz dazu wird bei einer Sterilisation der Behälter 50 durch die Zufuhr von Wasserstoffperoxyd in den Behandlungssternen 9 sowie 9' kleine Kühlung durch die Zufuhr von flüssigem Stickstoff im Transferstern 10 durchgeführt. Der Behandlungsstern 9''' weist nur eine Luftzufuhr 110 auf, so dass hier bei allen alternativen Behandlungsmethoden immer nur mit Luft gespült wird. Die anderen Behandlungssterne 9, 9' und 9" können je nach Behandlungsmethode entweder zum Sterilisieren oder nur zum Spülen verwendet werden, je nachdem, welche Behandlungsvariante gerade benötigt wird.

Die Versorgungseinrichtung für das Wasserstoffperoxyd befindet sich auf einem Podest 111. Dies hat den Vorteil, dass die Peripherie für die Bereitstellung des Wasserstoffperoxyds leicht zugänglich für Reparatur- bzw. Wartungsarbeiten ist.

## Patentansprüche

1. Vorrichtung zur Herstellung von Kunststoffbehältern, wobei die Vorrichtung mindestens eine Behälterherstellungsmaschine (1), eine Behälterbehandlungsstation (2) und eine Behälterfüllmaschine (3) umfasst, wobei ein Auslauf der Behälterherstellungsmaschine (1) mit einem Einlauf der Behälterbehandlungsstation (2) und ein Auslauf der Behälterbehandlungsstation (2) mit einem Einlauf der Behälterfüllmaschine wirkverbunden ist und wobei die Behälterbehandlungsstation zwischen der Behälterherstellungsmaschine (1) und der Behältertüllmaschine (3) angeordnet ist, und wobei die Behälterbehandlungsstation (2) mindestens zwei Behandlungsaggregate (9, 9', 9'', 9''') umfasst, die jeweils für voneinander verschiedene Behandlungen der Kunststoffbehälter ausgestaltet sind,
**gekennzeichnet durch**
eine Steuerung zur wahlweise Aktivierung/Deaktivierung der mindestens zwei Behandlungsaggregate (9, 9', 9'', 9''') in Abhängigkeit davon, ob die Kunststoffbehälter für karbonisierte oder für nichtkarbonisierte Lebensmittel und die damit zusammenhangenden Anforderungen bezüglich ihrer Eigenschaften geeignet sein sollen.

2. Vorrichtung nach Anspruch 1, **dadurch gekennzeichnet, dass** es sich bei den Behandlungsaggregaten (9, 9', 9'', 9''') um Kühlaggnegate und/oder Steritisationsaggregate und/oder Ausstattungsaggregate handelt.

3. Vorrichtung nach Anspruch 1 oder 2, **dadurch gekennzeichnet, dass** sich die Behandlungsaggregate (9, 9', 9'', 9''') zumindest teilweise in einem gegenüber den Umgebungsbedingungen abgeschlossenen Raum befinden.

4. Vorrichtung nach mindestens einem der vorhergehenden Ansprüche, **dadurch gekennzeichnet, dass** die Behälterbehandlungsstation (2) einen gegenüber den Umgebungsbedingungen im Wesentlichen abgeschlossenen Raum bildet.

5. Vorrichtung nach mindestens einem der vorhergehenden Ansprüche, **dadurch gekennzeichnet, dass** die Behälterbehandlungsstation (2) mehrere Transportsterne aufweist.

6. Vorrichtung nach mindestens einem der vorhergehenden Ansprüche, **dadurch gekennzeichnet, dass** die Behälterbehandlungsstation (2) mehrere Behandlungssterne (9) sowie mehrere Transfersterne (10) aufweist, die die Behälter im Mündungsbereich haltend transportieren.

7. Vorrichtung nach Anspruch 6, **dadurch gekennzeichnet, dass** den Behandlungssternen (9) mitlaufende Düsen (11) zugeordnet sind, durch die ein Behandlungsmedium in die Behälter eingebracht werden kann.

8. Vorrichtung nach wenigstens einem der Ansprüche 6 bis 7, **dadurch gekennzeichnet, dass** die Behandlungssterne (9) und/oder die Düsen (11) höhenbeweglich angebracht sind, damit die relativen Abstände zueinander veränderbar sind.

9. Vorrichtung nach wenigstens einem der Ansprüche 7 bis 8, **dadurch gekennzeichnet, dass** die Düsen (11) mit einem Verteiler (12) in Verbindung stehen, der einen drehenden und einen stationären Teil aufweist, wobei der stationäre Teil des Verteilers (12) mit einem Verdampfer (13) in Verbindung steht.

10. Vorrichtung nach wenigstens einem der vorhergehenden Ansprüche, **dadurch gekennzeichnet, dass** die Behälterbehandlungsstation (2) mindestens ein Kühlaggregat zur Innen- und/oder Außenbehandlung der Behälter umfasst.

11. Vorrichtung nach Anspruch 10, **dadurch gekennzeichnet, dass** das Kühlaggregat mit flüssigem Stickstoff betreibbar ist.

12. Vorrichtung nach Anspruch 10 bis 11, **dadurch gekennzeichnet, dass** die Behälterbehandlungsstation (2) mit mindestens zwei Kühlaggregaten ausgestattet ist.

13. Vorrichtung nach wenigstens einem der vorhergehenden Ansprüche, **dadurch gekennzeichnet, dass** die Behälterbehandlungsstation (2) als weiteres Kühlaggregat einen Kühltunnel (14) aufweist.

14. Vorrichtung nach wenigstens einem der vorhergehenden Ansprüche, **dadurch gekennzeichnet, dass** am Einlauf der Maschine und am Auslauf der Maschine Schleusen vorhanden sind.

15. Vorrichtung nach wenigstens einem der vorhergehenden Ansprüche, **dadurch gekennzeichnet, dass** die Behälterherstellungsmaschine (1), die Behälterbehandlungsstation (2) sowie die Behälterfüllmaschine (3) synchron antreibbar sind.

16. Verfahren zur Herstellung von Kunststoffbehältern mit den Schritten Herstellung, Zwischenbehandlung und Füllen der Behälter, wobei die Herstellung in einer Behälterherstellungsmaschine (1), die Zwischenbehandlung in einer Behälterbehandlungsstation (2) und das Füllen in einer Behälterfüllmaschine (3) durchgeführt wird, wobei die Zwischenbehandlung zeitlich zwischen dem Herstellungsvorgang und dem Füllvorgang stattfindet und unterschiedliche Behandlungen, wie z.B. Sterilisation, Kühlung oder Ausstattung der Behälter, beinhalten kann,
**dadurch gekennzeichnet, dass**
mindestens zwei Behandlungsaggregate (9, 9', 9'', 9''' ) der Behälterbehandlungsstation (2), die jeweils voneinander verschiedene Behandlungen der Kunststoffbehälter ausführen, durch eine Steuerung in Abhängigkeit davon wahlweise aktiviert/deaktiviert werden, ob die Kunststoffbehälter für karbonisierte oder für nichtkarbonisierte Lebensmittel und die damit zusammenhangenden Anforderungen bezüglich ihrer Eigenschaften geeignet sein sollen.

17. Verfahren nach Anspruch 16, **dadurch gekennzeichnet, dass** in der Behälterbehandlungsstation (2) eine Sterilisation des Behälterinnenraumes mit einem Sterilisationsmedium vorgenommen wird.

18. Verfahren nach Anspruch 16 oder 17, **dadurch gekennzeichnet, dass** in der Behälterbehandlungsstation (2) eine Sterilisation zumindest eines Teils der Behälteraußenwand mit einem Sterilisationsmedium vorgenommen wird.

19. Verfahren nach Anspruch 17 oder 18, **dadurch gekennzeichnet, dass** bei der Sterilisation ein flüssiges und/oder gasförmiges und/oder dampfförmiges Sterilisationsmedium verwendet wird.

20. Verfahren nach Anspruch 17, **dadurch gekennzeichnet, dass** die Sterilisation im Behälterinnenraum mit dampfförmigem Wasserstoffperoxyd durchgeführt wird.

21. Verfahren nach wenigstens einem der Ansprüche 17 bis 20, **dadurch gekennzeichnet, dass** eine Reinigung der Behälteraußenwand mit sterilem Wasser durchgeführt wird.

22. Verfahren nach wenigstens einem der Ansprüche 16 bis 21, **dadurch gekennzeichnet, dass** der Transport der herzustellenden Behältern zwischen der Behälterherstellungsmaschine (1) und der Behälterfüllmaschine (3) in der Behälterbehandlungsstation (2) mittels Transportsternen (9, 10) erfolgt, wobei die Zwischenbehandlung in der Behälterbehandlungsstation (2) während des Transports der Behältern erfolgt.

23. Verfahren nach Anspruch 17, **dadurch gekennzeichnet, dass** die Sterilisation des Behälterinnenraumes in Behandlungssternen (9) sowie eine Sterilisation der Behälteraußenwand in Transfersternen (10) erfolgt.

24. Verfahren nach wenigstens einem der Ansprüche 16 bis 23, **dadurch gekennzeichnet, dass** die Behälter während des Transports durch die Behälterbehandlungsstation (2) mittels mindestens zwei Behandlungssternen (9) und mindestens einem Transferstern (10) gehalten werden.

25. Verfahren nach wenigstens einem der Ansprüche 16 bis 24, **dadurch gekennzeichnet, dass** die Behälterbehandlungsstation (2) mindestens vier Behandlungssterne (9) und drei Transfersterne (10) aufweist, wobei in den Behandlungssternen (9) eine Behandlung mit Wasserstoffperoxyd und ein Spülen mit Sterilluft stattfindet und wobei in den Transfersternen (10) keine Behandlung oder eine Sterilisation der Behälteraußenwand stattfindet.

26. Verfahren nach wenigstens einem der Ansprüche 16 bis 25, **dadurch gekennzeichnet, dass** die zu behandelnden Behälter beim Eintritt in die Behälterbehandlungsstation (2) noch eine Restwärme aufweisen, die eine sofortige trockene Sterilisation mit dampfförmigem Sterilisationsmittel ohne Kondensation desselben ermöglicht.

27. Verfahren nach wenigstens einem der Ansprüche 16 bis 26, **dadurch gekennzeichnet, dass** zur Bodenkühlung flüssiger Stickstoff in die Behälter eingebracht wird, wobei die Einbringung des Stickstoffs erfolgt, während sich der Behälter in einem Übergabestern (10a), einem Transferstern (10) oder einem Behandlungsstern (9) befindet.

28. Verfahren nach wenigstens einem der Ansprüche 16 bis 27, **dadurch gekennzeichnet, dass** bei der Herstellung von Behältern für karbonisierte Getränke in der Behälterbehandlungsstation (2) hauptsächlich die Behandlungsaggregate (9, 9', 9'', 9''') zur Kühlung und bei der Herstellung von Behältern für nicht karbonisierte Getränke hauptsächlich die Behandlungsaggregate (9, 9', 9'', 9''') zur Sterilisation aktiv sind.

## Claims

1. Device for producing plastic containers, wherein the device comprises at least one container production machine (1), a container treatment station (2) and a container filling machine (3), wherein an outlet of the container production machine (1) is actively connected to an inlet of the container treatment station (2) and an outlet of the container treatment station (2) is actively connected to an inlet of the container filling machine (3), and wherein the container treatment station is arranged between the container production machine (1) and the container filling machine (3) and wherein the container treatment station (2) comprises at least two treatment units (9, 9', 9", 9'") which are each designed for the treatment procedures of plastic containers which are different from each other, **characterized by**
controls for optionally activating/deactivating the at least two treatment units (9, 9', 9", 9'") in dependence of the fact if the plastic containers should be suitable for carbonated or non-carbonated food and the involved requirements with regard to their properties.

2. Device according to claim 1, **characterised in that** the treatment units (9, 9', 9", 9'") are cooling units and/or sterilisation units and/or decorating units.

3. Device according to claims 1 or 2, **characterised in that** the treatment units (9, 9', 9", 9'") are located at least partially in a chamber which is closed off from the ambient conditions.

4. Device according to at least one of the preceding claims, **characterised in that** the container treatment station (2) forms a chamber which is substantially closed off from the ambient conditions.

5. Device according to at least one of the preceding claims, **characterised in that** the container treatment station (2) comprises a plurality of transport stars.

6. Device according to at least one of the preceding claims, **characterised in that** the container treatment station (2) comprises a plurality of treatment stars (9) as well as a plurality of transfer stars (10) which transport the containers by holding them in the mouth region.

7. Device according to claim 6, **characterised in that** nozzles (11) are assigned to the treatment star which rotate therewith and through which a treatment medium can be introduced into the containers.

8. Device according to at least one of claims 6 to 7, **characterised in that** the treatment stars (9) and/or the nozzles (11) are arranged in a height-adjustable manner so that the relative distances thereof with respect to one another can be varied.

9. Device according to at least one of claims 7 to 8, **characterised in that** the nozzles (11) are connected to a distributor (12) which has a rotating part and a stationary part, wherein the stationary part of the distributor (12) is connected to an evaporator (13).

10. Device according to at least one of the preceding claims, **characterised in that** the container treatment station (2) comprises at least one cooling unit for the internal and/or external treatment of the containers.

11. Device according to claim 10, **characterised in that** the cooling unit can be operated with liquid nitrogen.

12. Device according to claims 10 to 11, **characterised in that** the container treatment station (2) is equipped with at least two cooling units.

13. Device according to at least one of the preceding claims, **characterised in that** the container treatment station (2) has a cooling tunnel (14) as a further cooling unit.

14. Device according to at least one of the preceding claims, **characterised in that** airlocks are provided at the inlet of the machine and at the outlet of the machine.

15. Device according to at least one of the preceding claims, **characterised in that** the container production machine (1), the container treatment station (2) as well as the container filling machine (3) can be driven synchronously.

16. Method for producing plastic containers, comprising the steps of production, intermediate treatment and filling of the containers, wherein the production is carried out in a container production machine (1), the intermediate treatment is carried out in a container treatment station (2) and the filling is carried out in a container filling machine (3), wherein the intermediate treatment takes place temporally between the production process and the filling process and may include different treatments, such as e.g. sterilisation, cooling or decorating of the containers, **characterised in that** at least two treatment units (9, 9', 9", 9'") of the container treatment unit (2), which each carry out treatment procedures of the plastic containers which differ from each other are optionally activated/deactivated by controls in dependence of the fact if the plastic containers should be suitable for carbonated or non-carbonated food and the involved requirements with regard to their properties.

17. Method according to claim 16, **characterised in that** a sterilisation of the container interior by means of a sterilisation medium is carried out in the container treatment station (2).

18. Method according to claims 16 or 17, **characterised in that** a sterilisation of at least part of the container outer wall by means of a sterilisation medium is carried out in the container treatment station (2).

19. Method according to claims 17 or 18, **characterised in that** a sterilisation medium in liquid and/or gas and/or vapour form is used during the sterilisation.

20. Method according to claim 17, **characterised in that** the sterilisation in the container interior is carried out using hydrogen peroxide in vapour form.

21. Method according to at least one of claims 17 to 20, **characterised in that** a cleaning of the container outer wall is carried out using sterile water.

22. Method according to at least one of claims 16 to 21, **characterised in that** the containers to be produced are transported between the container production machine (1) and the container filling machine (3) by means of transport star wheels (9, 10) in the container treatment station (2), wherein the intermediate treatment in the container treatment station (2) takes place while the containers are being transported.

23. Method according to claim 17, **characterised in that** the sterilisation of the container interior takes place in treatment stars (9) as well as a sterilisation of the container outer wall takes place in transfer stars (10).

24. Method according to at least one of claims 16 to 23, **characterised in that** the containers are held by means of at least two treatment stars (9) and at least one transfer star (10) during transport through the container treatment station (2).

25. Method according to at least one of claims 16 to 24, **characterised in that** the container treatment station (2) comprises at least four treatment stars (9) and three transfer stars (10), wherein a treatment with hydrogen peroxide and a rinsing with sterile air takes place in the treatment stars (9), and wherein no treatment or a sterilisation of the container outer wall takes place in the transfer stars (10).

26. Method according to at least one of claims 16 to 25, **characterised in that** the containers to be treated still possess a residual heat as they enter the container treatment station (2), which allows an immediate dry sterilisation using sterilisation media in vapour form without condensation thereof.

27. Method according to at least one of claims 16 to 26, **characterised in that** liquid nitrogen is introduced into the containers in order to cool the bottom, wherein the introduction of nitrogen takes place while the container is located in a hand-over star (10a), a transfer star (10) or a treatment star (9).

28. Method according to at least one of claims 16 to 27, **characterised in that**, in the container treatment station (2), mainly the treatment units (9, 9', 9", 9'") for cooling are active when producing containers for carbonated beverages and mainly the treatment units (9, 9', 9", 9'") for sterilisation are active when producing containers for non-carbonated beverages.

## Revendications

1. Installation pour la fabrication de récipients en matière plastique, ladite installation comprenant au moins une machine à fabriquer des récipients (1), une station de traitement des récipients (2) et une machine à remplir des récipients (3), une sortie de la machine à fabriquer des récipients (1) étant fonctionnellement reliée à une entrée de la station de traitement des récipients (2), une sortie de la station de traitement des récipients (2) étant fonctionnellement reliée à une entrée de la machine à remplir des récipients, la station de traitement des récipients étant disposée entre la machine à fabriquer des récipients (1) et la machine à remplir des récipients (3), et la station de traitement des récipients (2) comprenant au moins deux groupes de traitement (9, 9', 9", 9"'), lesquels sont équipés chacun pour un traitement des récipients en matière plastique différant des autres traitements,
**caractérisée par**
une commande pour l'activation/la désactivation en option des au moins deux groupes de traitement (9, 9', 9", 9'") en fonction de la nécessité d'adapter ou non les récipients en matière plastique à des produits alimentaires saturés ou non saturés en gaz carbonique et aux exigences correspondantes quant à leurs propriétés.

2. Installation selon la revendication 1, **caractérisée en ce que** les groupes de traitement (9, 9', 9", 9'") sont des groupes de refroidissement et/ou des groupes de stérilisation et/ou des groupes d'équipement.

3. Installation selon la revendication 1 ou 2, **caractérisée en ce que** les groupes de traitement (9, 9', 9", 9'") se trouvent au moins partiellement dans un espace isolé des conditions ambiantes.

4. Installation selon au moins une des revendications précédentes, **caractérisée en ce que** la station de traitement des récipients (2) forme un espace sensiblement isolé des conditions ambiantes.

5. Installation selon au moins une des revendications précédentes, **caractérisée en ce que** la station de traitement des récipients (2) comporte plusieurs étoiles de transport.

6. Installation selon au moins une des revendications précédentes, **caractérisée en ce que** la station de traitement des récipients (2) comporte plusieurs étoiles de traitement (9) ainsi que plusieurs étoiles de transfert (10) qui transportent les récipients en les maintenant dans la partie d'embouchure.

7. Installation selon la revendication 6, **caractérisée en ce que** des buses (11) se déplaçant conjointement sont associées aux étoiles de traitement (9) et permettent le versement d'un fluide de traitement dans les récipients.

8. Installation selon au moins une des revendications 6 et 7, **caractérisée en ce que** les étoiles de traitement (9) et / ou les buses (11) sont montées de manière à être déplaçables en hauteur pour pouvoir modifier les intervalles relatifs entre elles.

9. Installation selon au moins une des revendications 7 et 8, **caractérisée en ce que** les buses (11) sont reliées à un distributeur (12) présentant une partie rotative et une partie fixe, la partie fixe du distributeur (12) étant reliée à un vaporisateur (13).

10. Installation selon au moins une des revendications précédentes, **caractérisée en ce que** la station de traitement des récipients (2) comprend au moins un groupe de refroidissement pour le traitement intérieur et/ou extérieur des récipients.

11. Installation selon la revendication 10, **caractérisée en ce que** le groupe de refroidissement fonctionne à l'azote liquide.

12. Installation selon les revendications 10 et 11, **caractérisée en ce que** la station de traitement des récipients (2) est pourvue d'au moins deux groupes de refroidissement.

13. Installation selon au moins une des revendications précédentes, **caractérisée en ce que** la station de traitement des récipients (2) comporte un tunnel de refroidissement (14) en tant qu'autre groupe de refroidissement.

14. Installation selon au moins une des revendications précédentes, **caractérisée en ce que** des sas sont disposés à l'entrée de la machine et à la sortie de la machine.

15. Installation selon au moins une des revendications précédentes, **caractérisée en ce que** la machine à fabriquer des récipients (1), la station de traitement des récipients (2) ainsi que la machine à remplir des récipients (3) sont entraînables de manière synchrone.

16. Procédé de fabrication de récipients en matière plastique, comprenant les étapes de fabrication, de traitement intermédiaire et de remplissage des récipients, la fabrication étant effectuée dans une machine à fabriquer des récipients (1), le traitement intermédiaire dans une station de traitement des récipients (2) et le remplissage dans une machine à remplir des récipients (3), le traitement intermédiaire ayant temporellement lieu entre le processus de fabrication et le processus de remplissage et pouvant comporter différents traitements, tels que la stérilisation, le refroidissement ou l'équipement des récipients,
**caractérisé en ce qu'**
au moins deux groupes de traitement (9, 9', 9", 9'") de la station de traitement des récipients (2), lesquels exécutent chacun un traitement des récipients en matière plastique différant des autres traitements, sont activés/désactivés en option par une commande en fonction de la nécessité d'adapter ou non les récipients en matière plastique à des produits alimentaires saturés ou non saturés en gaz carbonique et aux exigences correspondantes quant à leurs propriétés.

17. Procédé selon la revendication 16, **caractérisé en ce qu'**il est procédé à une stérilisation de l'intérieur des récipients par un fluide de stérilisation dans la station de traitement des récipients (2).

18. Procédé selon la revendication 16 ou 17, **caractérisé en ce qu'**il est procédé à une stérilisation d'au moins une partie de la paroi extérieure des récipients par un fluide de stérilisation dans la station de traitement des récipients (2).

19. Procédé selon la revendication 17 ou 18, **caractérisé en ce qu'**un fluide de stérilisation liquide et / ou gazeux et / ou vaporisé est utilisé pour la stérilisation.

20. Procédé selon la revendication 17, **caractérisé en ce que** la stérilisation à l'intérieur des récipients est effectuée avec du peroxyde d'hydrogène vaporisé.

21. Procédé selon au moins une des revendications 17 à 20, **caractérisée en ce qu'**un nettoyage de la paroi extérieure des récipients est effectué avec de l'eau stérile.

22. Procédé selon au moins une des revendications 16 à 21, **caractérisé en ce que** le transport des récipients à fabriquer entre la machine à fabriquer des récipients (1) et la machine à remplir des récipients (3) est effectué au moyen d'étoiles de transport (9, 10) dans la station de traitement des récipients (2), le traitement intermédiaire étant effectué dans la station de traitement des récipients (2) pendant le transport des récipients.

23. Procédé selon la revendication 17, **caractérisé en ce que** la stérilisation de l'intérieur des récipients est effectuée dans des étoiles de traitement (9), et une stérilisation de la paroi extérieure des récipients dans des étoiles de transfert (10).

24. Procédé selon au moins une des revendications 16 à 23, **caractérisé en ce que** les récipients sont maintenus par au moins deux étoiles de traitement (9) et au moins une étoile de transfert (10) pendant le transport au travers de la station de traitement des récipients (2).

25. Procédé selon au moins une des revendications 16 à 24, **caractérisé en ce que** la station de traitement des récipients (2) comprend au moins quatre étoiles de traitement (9) et trois étoiles de transfert (10), un traitement au peroxyde d'hydrogène et un rinçage à l'air stérile étant effectués dans les étoiles de traitement (9), et aucun traitement n'étant effectué, ou une stérilisation de la paroi extérieure des récipients étant effectuée dans les étoiles de transfert (10).

26. Procédé selon au moins une des revendications 16 à 25, **caractérisé en ce que** les récipients à traiter présentent encore une chaleur résiduelle à l'entrée dans la station de traitement des récipients (2), laquelle permet une stérilisation immédiate à sec avec un agent de stérilisation vaporisé sans condensation de celui-ci.

27. Procédé selon au moins une des revendications 16 à 26, **caractérisé en ce que**, pour le refroidissement de fond, de l'azote liquide est introduit dans les récipients, l'introduction de l'azote étant réalisée pendant que le récipient se trouve dans une étoile de passage (10a), une étoile de transfert (10) ou une étoile de traitement (9).

28. Procédé selon au moins une des revendications 16 à 27, **caractérisé en ce que**, lors de la fabrication de récipients pour des boissons saturées en gaz carbonique dans la station de traitement des récipients (2), les groupes de traitement (9, 9', 9", 9'") sont principalement activés pour le refroidissement, et, lors de la fabrication de récipients pour des boissons non saturées en gaz carbonique, les groupes de traitement (9, 9', 9", 9'") sont principalement activés pour la stérilisation.
